# EUROPÄISCHE PATENTSCHRIFT

(11) **EP 0 816 193 B1**
(45) Veröffentlichungstag und Bekanntmachung des Hinweises auf die Patenterteilung: **11.09.2002**
(21) Anmeldenummer: 97109261.4
(22) Anmeldetag: 07.06.1997
(51) Int. Cl.: B60S 1/34, B60S 1/52

(54) **Nasswischarm einer Scheibenwischvorrichtung für Scheiben von Fahrzeugen**
Wiper arm provided with cleaning fluid for a vehicle windscreen wiper device
Bras d'essuyage porteur de liquide de nettoyage pour un dispositif d'essuie-glace de pare-brise de véhicule

(30) Priorität: 04.07.1996 DE 19626947; 18.04.1997 DE 19716248
(43) Veröffentlichungstag der Anmeldung: 07.01.1998
(73) Patentinhaber: Valeo Auto-Electric Wischer und Motoren GmbH, 74321 Bietigheim-Bissingen (DE)
(72) Erfinder: Grupp, Martin, 70435 Stuttgart (DE); Bienert, Herbert, 74354 Besigheim (DE); Alexander, Simon, 74357 Bönigheim (DE)
(74) Vertreter: Dreiss, Fuhlendorf, Steimle & Becker

(56) Entgegenhaltungen:
- WO-A-90/10561
- FR-A- 1 295 138
- GB-A- 2 263 394
- US-A- 3 916 473

## Beschreibung

Die Erfindung betrifft einen Naßwischarm einer Scheibenwischvorrichtung für Scheiben von Fahrzeugen mit den Merkmalen des Oberbegriffs des Anspruchs 1.

Aus der DE 25 09 876 A1 ist ein Naßwischarm bekannt, bei dem eine Waschflüssigkeitsleitung verdeckt in dem zur Scheibe hin offenen Querschnittsprofil des Wischarmes entlanggeführt ist und dabei an der auf die Scheibe weisenden Seite das Gelenk zwischen Befestigungsteil und Gelenkteil überquert. Hierbei ist das der Düsenvorrichtung gegenüberliegende Ende der Waschflüssigkeitsleitung mit einem am Befestigungsteil verdeckt angebrachten, formstabilen Leitungsverbinder verbunden, von dem aus ein weiterer Schlauch vom Befestigungsteil hinweggeführt und an eine Pumpe oder einen Vorratsbehälter oder dergleichen anschließbar ist. Bei Verwendung eines elastischen Schlauches als Waschflüssigkeitsleitung ist dieser bei derartigen Wischarmen relativ lose am Wischarm verlegt, so daß die beim Wegklappen des Wischarmes von der zu wischenden Scheibe eintretende Verlängerung des Abstandes zwischen den Befestigungsstellen des Schlauches am Wischarm kompensiert wird, ohne daß der Schlauch dabei elastisch gedehnt wird. Ein Problem besteht jedoch darin, daß, insbesondere nach mehrmaligem Wegklappen des Wischarmes von der Scheibe, der Schlauch an der Unterseite des Wischarmes aus dem Querschnittsprofil des Wischarmes heraustritt und, insbesondere im Bereich des Gelenkes zwischen Befestigungsteil und Gelenkteil, in Form einer nach unten durchhängenden Schlaufe sichtbar wird. Ein derartig heraushängender Schlauch ist nachteilig für die Aerodynamik und die Stilistik des Naßwischarmes und kann, insbesondere bei beengten Einbauverhältnissen am Fahrzeug, an Karosserieteilen schleifen oder sich gar an anderen Bauteilen verhaken.

Ein weiterer Naßwischarm mit im wesentlichen verdeckter Schlauchführung am Wischarm ist aus der DE 41 34 980 A1 bekannt. Bei diesem Naßwischarm ist das der Düsenvorrichtung gegenüberliegende Ende des Schlauches im Bereich des Befestigungsteiles durch dieses verdeckt mit dem Ende einer durch die hohle Wischerwelle geführten Waschflüssigkeitsleitung verbunden. Zur verdeckten Führung des Schlauches am Befestigunsteil ist im Bereich des Gelenkes zwischen Befestigungsteil und Gelenkteil eine seitliche Hohlkehle vorgesehen, in der die Flüssigkeitsleitung verläuft und die von einer Seitenwange des Gelenkteiles oder einer das Befestigungsteil abdeckenden Abdeckkappe verdeckt ist. Der Zugang zu der Hohlkehle ist an der Unterseite des Befestigungsteiles eingeengt, wodurch der Schlauch im Bereich des Gelenkes relativ sicher gehalten ist, und somit an dieser Stelle nicht die zuvor beschriebene Schlaufe bilden kann. Nachteilig hierbei ist jedoch, daß durch den stark verengten Zugang zu der Hohlkehle der Schlauch bei seiner Montage stark verformt werden muß, was die Montage erheblich erschwert. Darüberhinaus ist nicht ausgeschlossen, daß sich an anderen Abschnitten des Befestigungsteiles oder des Gelenkteiles trotzdem eine an der Unterseite des Wischarmes herausragende Schlaufe bildet.

Aus der DE 41 30 023 C2 ist ein anderer Naßwischarm bekannt, bei dem der Schlauch zur Versorgung einer am Wischarm befestigten Waschdüse mit Waschflüssigkeit außen an einer Längsseite des Wischarmes verlegt bzw. entlanggeführt ist. In diesem Fall ist der Schlauch unverdeckt, das heißt sichtbar, was aus Gründen der Aerodynamik und der Stilistik nachteilig ist. Zur Halterung des Schlauches, dessen der Waschdüse gegenüberliegender Teil in Längsrichtung vom Befestigungsteil hinweggeführt ist, sind beiderseits des Wischarmgelenkes, also an der Seite des Befestigungsteiles und des Gelenkteiles, quer zur Längsrichtung des Schlauches offene Aufnahmen angebracht, in die der Schlauch eingelegt ist. Dabei ist davon auszugehen, daß diese Aufnahmen den Schlauch im wesentlichen nur quer zu seiner Längsrichtung halten und daß bereits relativ geringe Zugkräfte ausreichen, um die Reibung des Schlauches in der Aufnahme zu überwinden und den Schlauch relativ zum Wischarm in Längsrichtung zu verschieben. Jedoch existiert bei diesem Naßwischarm kaum das Problem des Entstehens einer von der Unterseite des Wischarmes abstehenden Schlaufe, weil der Schlauch seitlich am Wischarm gehalten ist und das Wischarmgelenk an der Seite des Wischarmes überquert.

Die GB-A-2 263 394 zeigt einen Naßwischarm mit den Merkmalen des Oberbegriffs des Anspruchs 1. Die Festlegung des Schlauches an der ersten Festlegungsstelle erfolgt durch eine Feder, durch die der Schlauch hindurchgeführt ist. Im Bereich des Gelenks wird der Schlauch mit Hilfe eines Klips in Position gehalten. Auf der zur Wischerwelle gewandten Seite des Gelenks ist der Schlauch durch ein Durchgangsloch hindurchgeführt, das in dem Wischerträger ausgespart ist.

Aufgabe der Erfindung ist es, einen Nasswischarm mit den Merkmalen des Oberbegriffs des neuen Patentanspruchs 1 derartig weiterzuentwickeln, dass selbst bei häufigem Wegklappen des Wischarmes von der zu wischenden Scheibe das Entstehen eines an der Unterseite vom Wischarm abstehenden schlaufenförmigen Abschnitts des Schlauches vermieden wird.

Erfindungsgemäß wird die Aufgabe mit einem Naßwischarm gelöst, der die Merkmale des Anspruchs 1 aufweist.

Da der Schlauch an der der ersten Festlegungsstelle gegenüberliegenden Seite des zwischen Befestigungsteil und Gelenkteil gebildeten Gelenkes in der Art einer Zugentlastung an einer zweiten Festlegungsstelle am Befestigungsteil oder/und an einer Abdeckkappe des Befestigungsteiles festgelegt ist, kann der weiter stromauf liegende Teil des Schlauches an der dem Wischarmgelenk gegenüberliegenden Seite der zweiten Festlegungsstelle von dem Wischarm bzw. dem Befestigungsteil hinweggeführt werden. Der Schlauch ist somit beiderseits des Gelenkes zwischen Befestigungsteil und Gelenkteil an den beiden Festlegungsstellen zumindest hinsichtlich seiner Längsrichtung eingespannt, und außerdem ist der den Abstand zwischen den beiden Einspannstellen überbrückende Schlauchabschnitt in Betriebsstellung des Wischarmes ohne bzw. ohne wesentliche Zugspannung in dem Abstand zwischen den beiden Einspannstellen straff geführt. Deshalb verbleibt der Schlauch sicher in seiner im wesentlichen verdeckten Anordnung am Wischarm. Beim Wegklappen des Wischarmes von der Scheibe wird der zwischen den beiden Festlegungsstellen gebildete Abschnitt des Schlauches elastisch gelängt. Beim Zurückklappen des Wischarmes in seine Betriebsstellung nimmt dieser Schlauchabschnitt aufgrund seiner elastischen Rückstellkräfte seine ursprüngliche Länge wieder ein, wodurch dauerhaft das Entstehen eines an der Unterseite vom Wischarm abstehenden schlaufenartigen Abschnittes des Waschflüssigkeitsschlauches vermieden wird. Der von dem Befestigungsteil des Wischarmes hinweggeführte Teil des Schlauches kann dann in bekannter Weise mit seinem Ende außerhalb des Wischarmes an eine Zuleitung oder eine Pumpe oder einen Vorratsbehälter oder dergleichen angeschlossen und dabei relativ lose verlegt werden.

In diesem Zusammenhang sollte bei der Gestaltung des erfindungsgemäßen Naßwischarmes darauf geachtet werden, daß in Abhängigkeit von der Elastizität des Schlauches der Abstand zwischen den beiden Festlegungsstellen mindestens so groß ist, daß der durch die beiden Festlegungsstellen begrenzte Schlauchabschnitt die beim Wegklappen des Gelenkteiles von der Scheibe eintretende elastische Längung aushält, ohne dabei selbst eine bleibende störende Längung zu erfahren. Eine solche bleibende Längung könnte nach längerer Betriebszeit ebenfalls dazu führen, daß der Schlauch an der Unterseite des Wischarmes aus dem Querschnittsprofil hervortritt und sichtbar wird.

Erfindungsgemäß wird die Einspannung des Schlauches an der zweiten Festlegungsstelle dadurch herbeigeführt ist, daß wechselweise von der einen Seitenwand des Schlauchkanales Vorsprünge in den Schlauchkanal hineinragen und an den Stellen der Vorsprünge die gegenüberliegende Seitenwand des Schlauchkanales eine korrespondierende Ausbuchtung aufweist. Bei einer derartigen Ausgestaltung ist die Größe der von der wesentlichen Längsführung des Schlauches abweichenden seitlichen Auslenkungen relativ gering gehalten, weshalb nur ein geringer Bauraum benötigt wird. Eine derartige Gestaltung des Schlauchkanales ist auch werkzeugtechnisch leicht beherrschbar, so daß die Herstellungskosten für das Befestigungsteil bzw. die Abdeckkappe gar nicht oder nur vernachlässigbar höher sind.

Vorteilhafte Ausgestaltungen der Erfindung ergeben sich aus den Unteransprüchen und aus den daraus resultierenden möglichen Merkmalskombinationen.

Vorteilhaft ist eine Ausgestaltung gemäß Anspruch 13, wonach die Festlegung bzw. Einspannung des Schlauches im Bereich des Gelenkteiles bzw. der Wischstange bzw. des Wischblattes, also an der ersten Festlegungsstelle, unmittelbar durch die Verbindung des Schlauches mit dem Schlauchanschlußstutzen der Düsenvorrichtung erfolgt. Die Düsenvorrichtung ist dabei direkt am Wischarm bzw. Wischblatt oder an einem mit dem Wischarm bzw. dem Wischblatt verbundenen Bauteil befestigt. Ein derartiges Bauteil, an dem die Düsenvorrichtung befestigt ist, kann auch eine Windleitvorrichtung oder eine Verkleidung oder ein Verbindungsteil von Wischarm und Wischblatt oder ein Koppelstück zwischen den beiden Armen eines Doppelwischarmes oder dergleichen sein. Jedenfalls sind der Schlauchanschlußstutzen und der Schlauch so aufeinander abgestimmt, daß sich eine ausreichend stabile form- und kraftschlüssige Verbindung ergibt, die geeignet ist, die beim Hochklappen des Gelenkteiles in dem Schlauch entstehenden elastischen Zugspannungen aufzunehmen. Alternativ dazu kann der Schlauch an der ersten Festlegungsstelle auch mittels einer Klemmvorrichtung am Wischarm bzw. Wischblatt oder an einem mit dem Wischarm bzw. dem Wischblatt verbundenen Bauteil befestigt sein, wobei das Bauteil auch hier in der vorstehend angeführten Art definiert ist.

Da die auf der anderen Seite des zwischen Befestigungsteil und Gelenkteil gebildeten Gelenkes vorgesehene Festlegungsstelle des Schlauches relativ weit von dem Schlauchanschlußstutzen der Düsenvorrichtung entfernt liegt, ist der die beiden Verbindungsstellen überbrückende Abschnitt des Schlauches folglich relativ lang, so daß die beim Wegklappen des Gelenkteiles von der Scheibe auf diesen Schlauchabschnitt bezogene elastische Längung verhältnismäßig gering ist und somit auch eine verhältnismäßig geringe Zugkraft in diesem Schlauchabschnitt entsteht. Durch die erfindungsgemäße Festlegung des Schlauches beiderseits des Gelenkes am Wischarm kann die angesprochene Zugkraft ohne Probleme kompensiert werden, und die Gefahr des Entstehens einer bleibenden Längung des überbrückenden Schlauchabschnittes ist vernachlässigbar gering.

Durch eine oder mehrere erzwungene Auslenkungen in wechselnde Richtungen bzw. durch eine erzwungene labyrinthartige oder schlangenlinienförmige Schlauchführung am Befestigungsteil oder/und an der Abdeckkappe des Befestigungsteiles gemäß Anspruch 4 ist die Reibung des Schlauches an dem Befestigungsteil oder/und an der Abdeckkappe so groß, daß der Schlauch in seiner Längsrichtung sicher am Wischarm festgelegt ist. Diese Art der Festlegung ist außerdem sehr schonend, da sie ohne bzw. ohne wesentliche Deformation des Querschnittes des Schlauches erfolgen kann, weshalb auch der Durchfluß der Waschflüssigkeit nicht behindert bzw. erschwert ist. Diese Festlegung in der Art einer Zugentlastung ist sehr gut geeignet, die beim Wegklappen des Wischarmes von der Scheibe auftretenden Zugspannungen schonend aufzunehmen. Von Vorteil ist hierbei außerdem, wenn die Festlegung des Schlauches durch eine vorstehend beschriebene Schlauchführung ohne zusätzliche Mittel oder Bauteile direkt am Befestigungsteil oder an der Abdeckkappe erfolgt.

Empfohlen wird eine Ausgestaltung gemäß Anspruch 5, wonach die Festlegung des Schlauches an der zweiten Festlegungsstelle innerhalb eines, vorzugsweise an einer Längsseite offenen, Schlauchkanales erfolgt, der am Befestigungsteil oder an der Abdeckkappe vorgesehen ist. Von Vorteil ist hierbei, daß die für die Einspannung des Schlauches erforderlichen Mittel platzsparend innerhalb des Schlauchkanales vorgesehen werden können und daß der Schlauch sicher in dem Schlauchkanal gehalten und geführt ist.

Alternative Arten der Festlegung des Schlauches an der zweiten Festlegungsstelle sind den Ansprüchen 2 und 3 entnehmbar.

Zu erwähnen ist noch, daß die Abstände zwischen den Auslenkungen der Schlauchführung gleichmäßig oder ungleichmäßig sein können und daß diese Abstände in Abhängigkeit von den Eigenschaften des Schlauches und/oder der beim Wegklappen des Gelenkteiles von der Scheibe zu kompensierenden Zugkraft des Schlauches festgelegt werden sollten. Durch diese Maßnahmen ist es möglich, eine schonende Auslegung der Einspannung des Schlauches am Befestigungsteil zu erreichen, die auf bestimmte Verhältnisse am jeweiligen Wischarm bzw, auf die geometrischen Eigenschaften und Werkstoffeigenschaften des Schlauches abgestimmt sind. Beispielsweise kann bei einem dickwandigen und relativ steifen Schlauch die Einspannkraft relativ groß sein, ohne den Schlauchquerschnitt übermäßig stark zu verformen. In diesem Fall wird eventuell eine einfache seitliche Auslenkung bzw. ein relativ großer Abstand zwischen mehreren Auslenkungen ausreichen, um den Schlauch sicher am Befestigungsteil einzuspannen. Bei einem dünnwandigeren oder weicheren Schlauch muß die Einspannung entsprechend schonender erfolgen, um keine übermäßigen, den Durchfluß behindernd Querschnittsverformungen des Schlauches zu erhalten. In diesem Fall ist es erforderlich, eine Mehrzahl von Auslenkungen in der Schlauchführung vorzusehen, deren Abstände voneinander relativ gering sind.

Besonders bevorzugt wird eine Weiterbildung der Erfindung gemäß Anspruch 6, wonach der Schlauch vom Gelenkteil kommend nach Überquerung des Gelenkes durch einen Durchbruch im Befestigungsteil von der Unterseite des Befestigungsteiles zu dessen Oberseite hindurchgeführt ist. Dieses ermöglicht in einfacher Weise die verdeckte Schlauchführung in dem ohnehin vorhandenen Raum zwischen der Oberseite des Befestigungsteiles und der Abdeckkappe.

Im Zusammenhang mit der Weiterbildung gemäß Anspruch 6 wird eine Weiterbildung nach Anspruch 7 besonders empfohlen. Das Einklemmen des Schlauches innerhalb des Durchbruches führt zu einer sicheren Festlegung des Schlauches, die keinen zusätzlichen Bauraum benötigt und keinen zusätzlichen Montageaufwand erfordert. Vor allem dann, wenn der Durchbruch gemäß Anspruch 8 gestaltet ist, ist eine besonders einfache Montage des Schlauches möglich. Nachdem der Schlauch durch den größeren Teil des Durchbruches hindurchgesteckt und in gewünschtem Maß straff gezogen ist, wird er in Längsrichtung des Langloches in den schmaleren Bereich hinein verschoben und dadurch eingeklemmt.

Die Wirksamkeit der Festlegung des Schlauches in der Art der Ansprüche 7 bzw. 8 hinsichtlich der Wirkung als Zugentlastung kann, insbesondere zur Aufnahme großer Zugspannungen, durch eine Weiterbildung der Erfindung nach Anspruch 9 erhöht werden. In diesem Zusammenhang ist eine Weiterbildung der Erfindung gemäß Anspruch 10 von Vorteil, welche vorsieht, daß in der Abdeckkappe ein in Richtung auf das Befestigungsteil abstehender Niederhalter angebracht ist, vorzugsweise in Form einer oder mehrerer einstückig mit der Abdeckkappe hergestellter Rippen. Dieser Niederhalter sorgt für die zusätzliche Umlenkung der Richtung des Schlauches, bevor dieser, beispielsweise gemäß Anspruch 10, durch eine in der Abdeckkappe vorgesehene Öffnung aus dem Wischarm austritt.

Bei geringeren aufzunehmenden Zugspannungen des Schlauches genügt eine bloße Einspannung des Schlauches in einem verengten Durchbruch des Befestigungsteiles oder eine bloße Hindurchführung des Schlauches durch einen Durchbruch im Befestigungsteil und anschließende ein- oder mehrmalige erzwungene Umlenkungen der Richtung des Schlauches ohne Einspannung im Durchbruch selbst. Es genügt aber auch eine bloße Hindurchführung des Schlauches durch den Durchbruch des Befestigungsteiles und eine anschließende Richtungsumlenkung mit gleichzeitiger Einklemmung des Schlauches durch einen in der Abdeckkappe angebrachten Niederhalter. Gemäß Anspruch 11 ist ein derartiger Niederhalter so bemessen, daß er in am Befestigungsteil verrastetem Zustand den Schlauch unter angemessener Verformung dessen Querschnittes zwischen sich und der Oberseite des Befestigungsteiles einklemmt und diesen somit in seiner Längsrichtung in der Art einer Zugentlastung am Wischarm festlegt.

Darüberhinaus sind natürlich auch Merkmalskombinationen der Unteransprüche möglich, die zu weitern Vorteilen führen. Für extrem hohe Zugspannungen im Schlauch ist beispielsweise eine Ausgestaltung möglich, die eine Einspannung des Schlauches in dem Durchbruch des Befestigungsteiles nach Anspruch 7 bzw. 8 und eine anschließende ein- oder mehrfache erzwungene Richtungsumlenkung des Schlauches nach Anspruch 9 bzw. 10 und erforderlichenfalls zusätzlich eine Einklemmung des Schlauches nach Anspruch 11 umfaßt.

Vorteilhaft für die Ausgestaltungen des Naßwischarmes, bei denen der Schlauch durch einen Durchbruch des Befestigungsteiles auf dessen Oberseite geführt ist, ist auch noch eine Weiterbildung der Erfindung gemäß Anspruch 12, wonach der Schlauch durch eine entsprechende Öffnung in der Abdeckkappe aus dem Wischarm austritt.

Anhand einer Zeichnung werden nachfolgend Ausführungsbeispiele der Erfindung näher beschrieben. In den zugehörigen Zeichnungen zeigen:
- Fig. 1: ein erstes Ausführungsbeispiel eines Naßwischarmes in Betriebsstellung,
- Fig. 2: eine Draufsicht des Naßwischarmes von Fig. 1,
- Fig. 3: eine Ansicht von unten auf das Befestigungsteil des Naßwischarmes von Fig. 1,
- Fig. 4: ein Querschnittsprofil des Befestigungsteiles des Befestigungsteiles von Fig. 3,
- Fig. 5: ein zweites Ausführungsbeispiel eines Naßwischarmes in Betriebsstellung,
- Fig. 6: eine Ansicht von unten auf das Befestigungsteil des Naßwischarmes von Fig. 5,
- Fig. 7: einen Schnitt entlang der Linie VII-VII in Fig. 6,
- Fig. 8: einen Schnitt entlang der Linie VIII-VIII in Fig. 6 und
- Fig. 9: ein drittes Ausführungsbeispiel eines Naßwischarmes in Betriebsstellung.

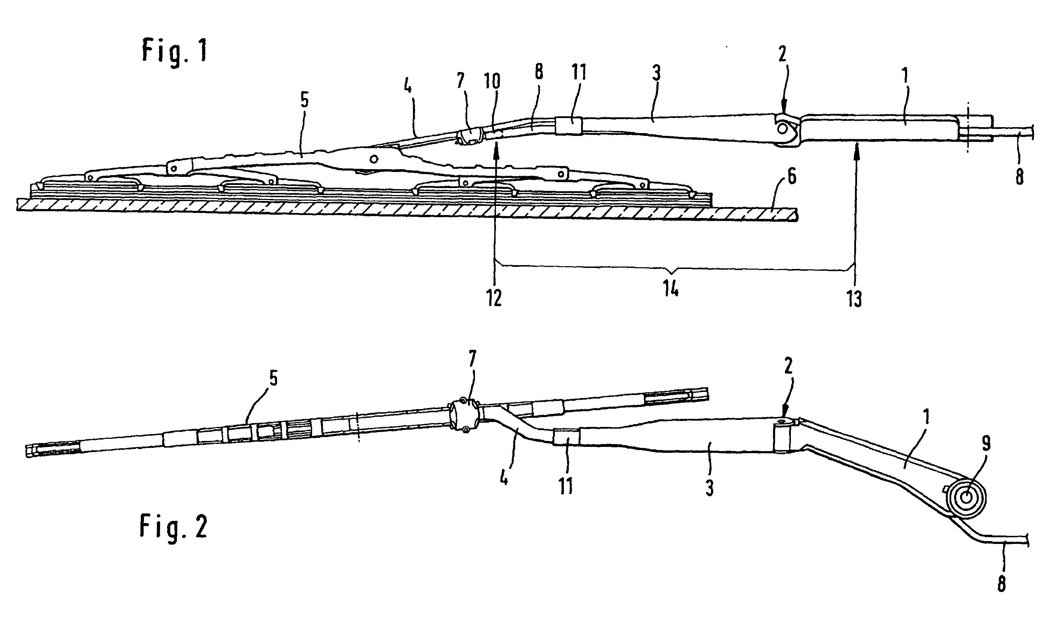

Der in Fig. 1 gezeigte Wischarm ist ein sogenannter Naßwischarm. Er besteht im wesentlichen aus einem Befestigungsteil 1, das drehfest an einer antreibbaren Wischerwelle zu befestigen ist und mit dem über ein Gelenk 2 ein Gelenkteil 3 verbunden ist. Am freien Ende des Gelenkteiles 3 ist eine Wischstange 4 befestigt, deren freies Ende zum schwenkbaren Verbinden mit einem Wischblatt 5 ausgebildet ist. Das Gelenk 2 dient dazu, daß das Gelenkteil 3 mit Wischstange 4 in Richtung auf die zu wischende Scheibe 6 bzw. von der zu wischenden Scheibe 6 weg schwenkbar ist. Im allgemeinen sorgt eine Anpreßfeder dafür, daß das Wischblatt 5 mit einer bestimmten Kraft auf der zu wischenden Scheibe 6 aufliegt. Es ist weiterhin eine Düsenvorrichtung 7 zu erkennen, deren Spritzdüsen dazu bestimmt sind, im Bedarfsfall Waschflüssigkeit auf die zu wischende Scheibe 6 abzugeben. Für den Transport von Waschflüssigkeit zu der Düsenvorrichtung 7 ist ein elastischer Schlauch 8 bestimmt, der entlang des Wischarmes verdeckt in dem zur Scheibe 6 hin offenen Querschnittsprofil des Befestigungsteiles 1 und des Gelenkteiles 3 verlegt ist. Es ist zu sehen, daß der Schlauch 8 neben der Aufnahme 9 für die Wischerwelle längs in das Befestigungsteil 1 eintritt und am gegenüberliegenden Ende unterhalb der Wischstange 4 aus dem Gelenkteil 3 austritt. Die an der Wischstange 4 befestigte Düsenvorrichtung 7 besitzt einen Schlauchanschlußstutzen 10, der unterhalb der Wischstange 4 verläuft und auf den das Ende des Schlauches 8 aufgesteckt ist. Dabei ist das Ende des Schlauches 8 form- und kraftschlüssig auf dem Schlauchanschlußstutzen 10 der Düsenvorrichtung 7 verspannt, so daß an dieser Stelle eine sichere Einspannung des Schlauches 8 gewährleistet ist. An der Austrittsstelle des Schlauches 8 an dem Gelenkteil 3 ist eine Haltevorrichtung 11 vorgesehen, welche dem Schlauch 8 eine Führung in Richtung der Wischstange 4 bietet, die jedoch nicht als Zugentlastung im Hinblick auf eine am Schlauch 8 angreifende Zugkraft wirkt.

Der Schlauch 8 ist innerhalb des Querschnittsprofiles des Wischarmes so geführt, daß er das Gelenk 2 an der Unterseite des Wischarmes überquert. Der Schlauchanschlußstutzen 10 der Düsenvorrichtung 7, mit welchem das Ende des Schlauches 8 fest verbunden ist, bildet eine erste Festlegungsstelle 12, die auf der einen Seite des Gelenkes 2 angeordnet ist. Eine zweite Einspannstelle 13 des Schlauches 8 ist direkt am Befestigungsteil 1 vorgesehen und befindet sich somit auf der anderen Seite des Gelenkes 2. An dieser zweiten Festlegungsstelle 13 ist der Schlauch 8 in der Art einer Zugentlastung an dem Befestigungsteil 1 festgelegt, so daß der Schlauch 8 bei Betriebsstellung, d. h. in gestreckter Lage des Wischarmes, in dem Abstand zwischen den beiden Festlegungsstellen 12, 13 ohne bzw. ohne wesentliche Zugspannung dauerhaft straff gehalten ist.

In gewissen Zeitabständen ist es erforderlich, den Wischarm, das heißt das Gelenkteil 3 mit Wischstange 4, von der Scheibe 6 wegzuklappen. Das ist beispielsweise dann erforderlich, wenn die Scheibe 6 von Hand geputzt wird oder wenn das Wischblatt 5 bzw. der Wischgummi des Wischblattes 5 aus Verschleißgründen ausgetauscht wird. Weil der Schlauch 8 das Gelenk 2 an der Unterseite des Wischarmes überquert, verlängert sich beim Wegklappen des Wischarmes von der Scheibe 6 der Abstand zwischen den beiden Festlegungsstellen 12 und 13, so daß der betreffende Schlauchabschnitt 14 eine elastische Längung erfährt, d.h. der Schlauchabschnitt 14 wird in Längsrichtung ausgedehnt. Beim Zurückklappen des Wischarmes auf die Scheibe 6 erfolgt eine Rückstellung der elastischen Längung des Schlauchabschnittes 14, so daß dieser in Betriebsstellung des Wischarmes seine ursprüngliche Länge einnimmt und weiterhin sicher verdeckt innerhalb des Querschnittsprofiles des Wischarmes gehalten und geführt ist. Durch die Erfindung wird also mit Sicherheit verhindert, daß der Schlauch 8 nach dem Zurückklappen des Wischarmes auf die Scheibe 6 an der Unterseite des Wischarmes aus dem Querschnittsprofil des Wischarmes heraustreten kann.

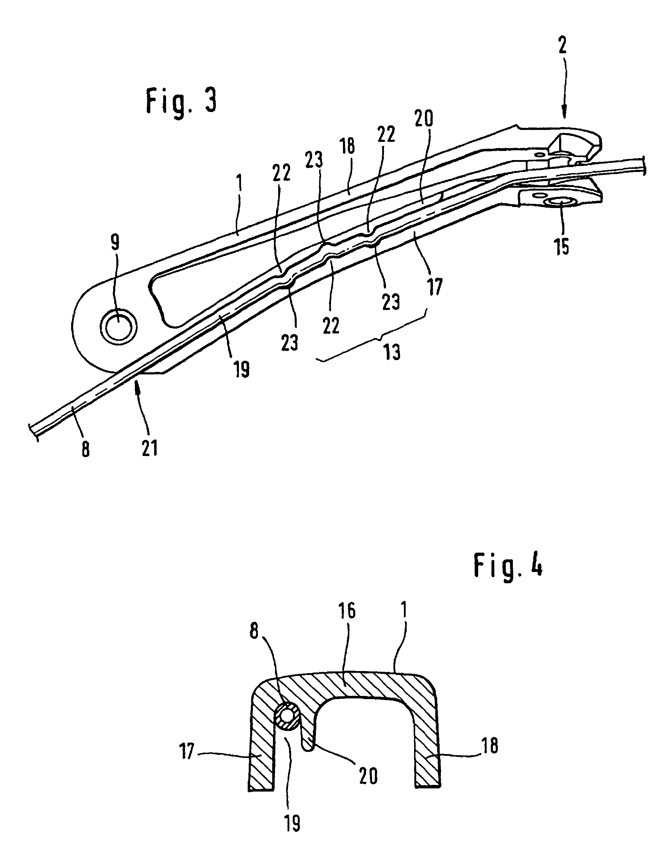

Einzelheiten der Führung und der Festlegung bzw. Einspannung des Schlauches 8 am Befestigungsteil 1 sind aus den Figuren 3 und 4 ersichtlich. Das Befestigungsteil 1 besitzt eine längliche Gestalt mit zwei Enden, wobei an einem Ende eine Aufnahme 9 für die Wischerwelle und am anderen Ende ein Lager 15 zur Bildung des Gelenkes 2 erkennbar sind. Zwischen der Aufnahme 9 und dem Lager 15 besitzt das Befestigungsteil 1 ein in Richtung auf die Scheibe 6 offenes U-artiges Querschnittsprofil mit einem Rücken 16, von dem aus sich die beiden Seitenwände 17 und 18 in Richtung auf die zu wischende Scheibe 6 erstrecken. Innerhalb des Querschnittsprofiles des Befestigungsteiles 1 verläuft der Schlauchkanal 19, der zur Aufnahme und Führung des Schlauches 8 bestimmt ist. Der Schlauchkanal 19 ist vorteilhaft an einer Längsseite des Befestigungsteiles 1 innerhalb des Querschnittsprofiles angeordnet, so daß die eine Seitenwand 17 des Befestigungsteiles 1 gleichzeitig eine Seitenwand 17 des Schlauchkanales 19 ist. Die zweite Seitenwand 20 des in Richtung zur Scheibe 6 offenen Schlauchkanales 19 ist zusätzlich an das Befestigungsteil 1 angeformt und erstreckt sich, ausgehend vom Rücken 16, ebenfalls in Richtung auf die zu wischende Scheibe 6. Seitlich neben der Aufnahme 9 für die Wischerwelle besitzt der Schlauchkanal 19 eine Öffnung 21, durch welche der Schlauch 8 annähernd in Längsrichtung des Befestigungsteiles 1 aus dem Wischarm austritt und von diesem hinweggeführt wird.

In Fig. 3 ist etwa im mittleren Bereich die zweite Festlegungsstelle 13 für den Schlauch 8 zu erkennen. An dieser Festlegungsstelle 13, die sich über einen gewissen Längsbereich des Befestigungsteiles 1 bzw. des Schlauchkanales 19 erstreckt, wird der Schlauch 8 dreimal aus seiner wesentlichen Längsrichtung seitlich ausgelenkt. Die seitlichen Auslenkungen werden dabei durch wechselweise angeordnete Vorsprünge 22 und gegenüberliegende korrespondierende Ausbuchtungen 23 herbeigeführt, welche in Längsrichtung des Befestigungsteiles 1 betrachtet, etwa in gleichen Abständen voneinander angeordnet sind. Es ist zu sehen, daß die Seitenwand 20 des Schlauchkanales 19 zwei Vorsprünge 22 besitzt, die noppenartig in den Schlauchkanal 19 hineinragen. Etwa mittig zwischen diesen Vorsprüngen 22 befindet sich in dieser Seitenwand 20 des Schlauchkanales 19 eine Ausbuchtung 23. Dementsprechend ist die gegenüberliegende Seitenwand 17 des Schlauchkanales 19, welche gleichzeitig die Seitenwand 17 des Befestigungsteiles 1 ist, mit zwei Ausbuchtungen 23 und etwa mittig zwischen diesen mit einem noppenartigen Vorsprung 22 versehen. Die Vorsprünge 22 und die korrespondierenden Ausbuchtungen 23 sind so ausgebildet und aufeinander abgestimmt, daß der Schlauch 8 ohne wesentliche Querschnittsänderung in dem Schlauchkanal 19 gehalten und geführt ist und dabei im Bereich der Festlegungsstelle 13 schlangenlinienförmig verläuft. Die Festlegungsstelle 13 am Befestigungsteil 1 ist somit in der Art einer Zugentlastung für den Schlauch 8 ausgebildet und ist in der Lage, die beim Wegschwenken des Wischarmes von der Scheibe 6 in dem Schlauch 8 zwischen den Festlegungsstellen 12 und 13 entstehenden elastischen Zugspannungen aufzunehmen. Dadurch ist gewährleistet, daß auch nach vielfachem Abklappen des Wischarmes der Schlauch 8 seine straffe Führung am Wischarm beibehält und nicht nach unten aus dem Querschnittsprofil des Wischarmes heraustreten kann. Anstelle des Schlauchkanales 19 könnten an der Innenseite des Befestigungsteiles Vorsprünge vorgesehen sein, wobei der Schlauch 8 in Form von Auslenkungen zwischen ihnen hindurch bzw. um sie herum geführt ist. Bei größeren in dem Schlauchabschnitt 14 zu erwartenden Zugkräften könnte der Abstand zwischen den Auslenkungen des Schlauches 8 verringert oder/und die Amplitude der Auslenkungen vergrößert werden.

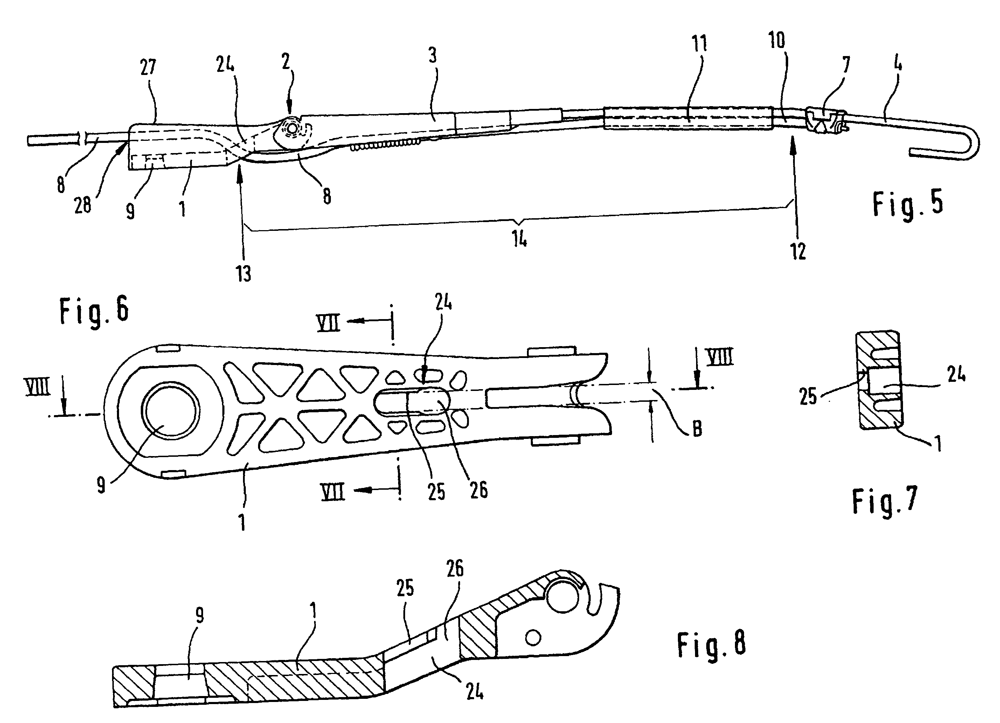

Bei dem in den Figuren 5-8 dargestellten Ausführungsbeispiel entsprchen der grundsätzliche Aufbau und die grundsätzliche Funktion des Naßwischarmes demjenigen, der in den Figuren 1 und 2 gezeigt ist. Deshalb werden in den Figuren 5-8 für gleiche bzw. entsprechende Bauteile bzw. Einzelheiten auch die gleichen Bezugszeichen verwendet. Ebenso wird hinsichtlich der Beschreibung des grundsätzlichen Aufbaus und der grundsätzlichen Funktion auf die vorstehende Beschreibung verwiesen und auf eine wiederholende Beschreibung verzichtet. Vielmehr wird nachfolgend im wesentlichen auf die unterschiedlichen Merkmale bzw. Gestaltungsmöglichkeiten eingegangen.

In Fig. 5 ist zu erkennen, daß der elastische Schlauch 8 im Bereich des Gelenkteiles 3 und des Befestigungsteiles 1 im wesentlichen verdeckt gehalten und geführt ist. Lediglich an der Unterseite des Gelenkes 2 ist der Schlauch 8 in einem kurzen Bereich von der Seite her sichtbar, jedoch ist er in diesem Bereich dauerhaft straff an der Unterseite des Wischarmes entlanggeführt. An der ersten Festlegungsstelle 12 ist der Schlauch 8 mit seinem Ende form- und kraftschlüssig auf dem Anschlußstutzen 10 der an der Wischstange 4 befestigten Düsenvorrichtung 7 festgelegt und somit eingespannt. Die an der Wischstange 4 angebrachte Haltevorrichtung 17 hält und führt den Schlauch 8, ohne ihn in seiner Längsrichtung festzulegen. Die Haltevorrichtung 11 könnte aber auch so ausgebildet sein, daß sie den Schlauch 8 auch in seiner Längsrichtung am Wischarm festlegt. In diesem Fall würde diese Haltevorrichtung 11 als Einspannung ausgelegt sein und somit die erste Festlegungsstelle 12 definieren. Nachdem er das Gelenk 2 an der Unterseite überquert hat, ist der Schlauch 8 durch einen Durchbruch 24 im Befestigungsteil 1 von der Unterseite zur Oberseite hindurchgeführt. Der Durchbruch 24 hat die Form eines längs zum Befestigungsteil 1 ausgerichteten Langloches. In dem vom Gelenk 2 abgewandten Teil des Durchbruches 24 sind an dessen gegenüberliegenden Längsseiten nach einwärts abstehende Klemmrippen 25 mit Einführungsschrägen vorgesehen, so daß in diesem Teil des Durchbruches 24 die Breite B kleiner ist als der Durchmesser des Schlauches 8. Der dem Gelenk 2 zugewandte Bereich 26 des Durchbruches 24 hat einen geringfügig größeren Durchmesser als der Schlauch 8, um ein einfaches Hindurchführen des Schlauches 8 durch den Durchbruch 24 zu ermöglichen. Die Breite B zwischen den Klemmrippen 25 ist so bemessen, daß der Schlauch innerhalb des Durchbruches 24 in der Art einer Zugentlastung festgelegt bzw. eingeklemmt ist. Durch die Abdeckkappe 27, wird der Schlauch 8 nach seinem Austritt aus dem Durchbruch 24 in seiner Richtung umgelenkt, was zusätzlich eine Erhöhung der Einspannkraft an der zweiten Festlegungsstelle 13 zur Folge hat. Um den Schlauch 8 an die Außenseite des Befestigungsteiles 1 und dann vom Wischarm hinwegzuführen, ist in der Abdeckkappe 27 eine entsprechende Öffnung 28 vorgesehen.

Bei einem solchen Wischarm könnte die Festlegung in der Art einer Zugentlastung auch allein an der Abdeckkappe 27 oder an dem Befestigungsteil 1 und an der Abdeckkappe 27 erfolgen. Die zweite Festlegungsstelle 13 befindet sich dann in dem Bereich der Abdeckkappe 27 oder/und des Befestigungsteiles 1, in dem die entsprechenden Mittel zur Festlegung des Schlauches 8 vorgesehen sind. In diesem Fall könnte auf eine Einklemmung des Schlauches 8 in dem Durchbruch 24 verzichtet werden. Der Durchbruch 24 dient dann der Hindurchführung des Schlauches 8.

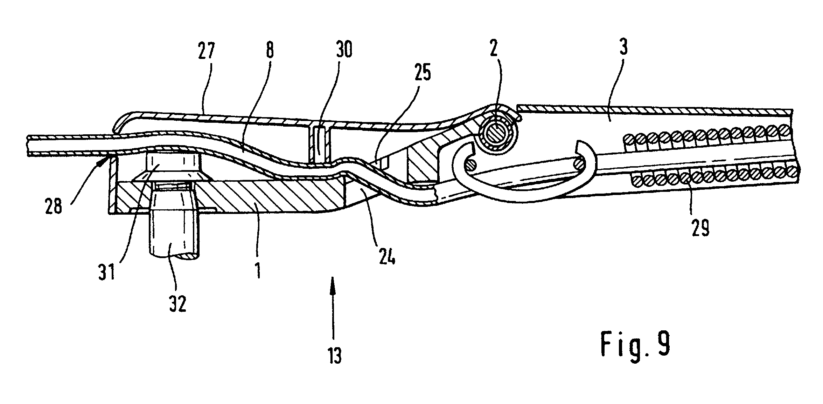

Bei dem in Figur 9 gezeigten Ausführungsbeispiel entsprechen der grundsätzliche Aufbau und die grundsätzliche Funktion des Wischarmes wiederum weitgehend den in den Figuren 1 bzw. 5 gezeigten Wischarmen. In Fig. 9 ist zu erkennen, daß der Schlauch 8 von der hier nicht gezeigten ersten Festlegungsstelle 12 kommend innerhalb des Gelenkteiles 2 verdeckt und dabei durch die Anpreßfeder 29 hindurch verlegt bzw. geführt ist. Nach Überquerung des Gelenkes 2 an der Unterseite des Wischarmes ist er wiederum durch den Durchbruch 24 im Bestigungsteil 1 hindurch von der Unterseite zur Oberseite geführt und dabei zum Zweck der Zugentlastung innerhalb des als Langloch ausgebildeten Durchbruches 24 zwischen den Klemmrippen 25 eingeklemmt. Ein in der Abdeckkappe 27 angebrachter und in Richtung auf das Befestigungsteil 1 abstehender Niederhalter 30 in Form von zwei voneinander beabstandeten Rippen lenkt die Richtung des an der Oberseite aus dem Durchbruch 24 ausgetretenen Schlauches 8 um, wobei der Schlauch gegen den Rand des Durchbruches 24 gedrückt wird. Dadurch wird die Haltekraft der Festlegung des Schlauches 8 an der zweiten Festlegungsstelle 13 erhöht. Eine nochmalige Vergrößerung dieser Haltekraft wird dadurch erreicht, daß der Schlauch 8 ein zweites Mal eingeklemmt ist, und zwar zwischen dem an der Abdeckkappe 27 angebrachten Niederhalter 30 und der Oberseite des Befestigungsteiles 1.

Im weiteren Verlauf ist zu sehen, daß die Richtung des Schlauches 8 nochmals geändert wird, weil der Schlauch 8 über die Befestigungsmutter 31 geführt ist, mit welcher der Wischarm bzw. das Befestigungsteil 1 auf dem Ende einer Wischerwelle 32 befestigt ist, bevor der Schlauch 8 seine verdeckte Führung durch die Öffnung 28 in der Abdeckkappe 27 verläßt. Diese Richtungsänderung in der Schlauchführung kann ebenfalls zur Erhöhung der Haltekraft der Schlauchfestlegung ausgenutzt werden, wobei im Bedarfsfall an dieser Stelle durch eine entsprechend tiefe Position der Öffnung 28 in der Abdeckkappe 27 eine nochmalige Klemmung des Schlauches 8 herbeigeführt werden kann.

Durch die Festlegung des Schlauches 8 an der ersten Festlegungsstelle 12 und die Festlegung in der Art einer Schlauchentlastung an der zweiten Festlegungsstelle 13, wobei der Schlauch in dem Abstand zwischen den beiden Festlegungsstellen 12, 13 beiderseits des Gelenkes 2 in Betriebsstellung ohne bzw. ohne wesentliche Zugspannung in dem Schlauchabschnitt 14 dauerhaft straff gehalten ist, werden die Nachteile des Standes der Technik überwunden.

## Patentansprüche

1. Nasswischarm einer Scheibenwischvorrichtung für Scheiben von Fahrzeugen mit einem Gelenkteil (3), das über ein Gelenk (2) auf die zu wischende Scheibe (6) hin bzw. von der zu wischenden Scheibe (6) weg schwenkbar mit einem Befestigungsteil (1) verbunden ist und an dem ein Wischblatt (5) direkt oder über eine am Gelenkteil (3) befestigte Wischstange (4) schwenkbar zu befestigen ist, wobei am Gelenkteil (3) oder an der Wischstange (4) oder am Wischblatt (5) eine Düsenvorrichtung (7) zur Abgabe von Waschflüssigkeit auf die zu wischende Scheibe (6) angeordnet ist, welche über einen elastischen Schlauch (8) mit Waschflüssigkeit versorgt wird, der im Bereich des Gelenkteiles (3) und des Befestigungsteiles (1) im Wesentlichen verdeckt an dem Wischarm entlanggeführt ist und an der auf die Scheibe (6) weisenden Seite das Gelenk (2) überquert, wobei der Schlauch (8) auf der einen Seite des Gelenkes (2) an einer ersten Festlegungsstelle (12) am Gelenkteil (3) bzw. an der Wischstange (4) oder am Wischblatt (5) oder an einem mit dem Gelenkteil (3) bzw. an der Wischstange (4) oder dem Wischblatt (5) verbundenen Bauteil festgelegt ist und auf der anderen Seite des Gelenkes (2) vom Wischarm hinweggeführt ist und außerhalb des Wischarmes an eine Zuleitung oder eine Pumpe oder einen Vorratsbehälter oder dergleichen anschließbar ist, wobei der Schlauch (8) am Befestigungsteil (1) oder/und an einer am Befestigungsteil (1) angebrachten Abdeckkappe (27) in der Art einer Zugentlastung festgelegt ist, wodurch eine zweite Festlegungsstelle (13) gebildet ist, und dass der Schlauch (8) in Arbeitsstellung des Wischarmes in dem Abstand zwischen den beiderseits des Gelenkes (2) befindlichen Festlegungsstellen (12, 13) in seiner Längsrichtung ohne bzw. ohne wesentliche Zugspannung dauerhaft straff gehalten ist, **dadurch gekennzeichnet, dass** die Festlegung des Schlauches (8) in seiner Längsrichtung am Befestigungsteil (1) oder an der Abdeckkappe (27) durch wechselweise von der einen Seitenwand (20, 17) eines Schlauchkanales (19) in den Schlauchkanal (19) hineinragende Vorsprünge (22) und korrespondierende Ausbuchtungen (23) der anderen Seitenwand (17, 20) des Schlauchkanales (19) herbeigeführt ist.

2. Nasswischarm nach dem Oberbegriff von Anspruch 1, **dadurch gekennzeichnet, dass** die Festlegung des Schlauches (8) an der zweiten Festlegungsstelle (13) durch am Befestigungsteil (1) oder/und an der Abdeckkappe (27) befindliche bzw. angebrachte Vorsprünge bewirkt wird.

3. Nasswischarm nach dem Oberbegriff von Anspruch 1, **dadurch gekennzeichnet, dass** die Festlegung des Schlauches (8) an der zweiten Festlegungsstelle (13) durch mehrere Durchbrüche im Befestigungsteil (1) bewirkt wird, durch welche der Schlauch (8) in wechselnde Richtungen hindurchgeführt ist.

4. Nasswischarm nach einem der vorhergehenden Ansprüche, **dadurch gekennzeichnet, dass** der Schlauch (8) an der zweiten Festlegungsstelle (13) durch eine Auslenkung oder durch mehrere Auslenkungen in wechselnde Richtungen bzw. durch eine labyrinthartige oder schlangenlinienförmige Schlauchführung am Befestigungsteil (1) oder/und an einer am Befestigungsteil(1) angebrachten Abdeckkappe (27) festgelegt ist.

5. Nasswischarm nach Anspruch 1, **dadurch gekennzeichnet, dass** der Schlauchkanal (19) am Befestigungsteil (1) oder an der Abdeckkappe (27) vorgesehenen und vorzugsweise an einer Längsseite offen ist.

6. Nasswischarm nach einem der vorhergehenden Ansprüche, **dadurch gekennzeichnet, dass** der Schlauch (8) vom Gelenkteil (3) kommend nach Überquerung des Gelenkes (2) durch einen Durchbruch (24) im Befestigungsteil (1) von der Unterseite des Befestigungsteiles (1) zu dessen Oberseite hindurchgeführt ist.

7. Nasswischarm nach Anspruch 6, **dadurch gekennzeichnet, dass** der Schlauch (8) innerhalb des Durchbruches (24) eingeklemmt ist.

8. Nasswischarm nach Anspruch 7, **dadurch gekennzeichnet, dass** der Durchbruch (24) die Form eines Langloches hat, dessen Breite (B) außerhalb eines Bereiches für die Einführung des Schlauches (8) zur Herbeiführung der Klemmung des Schlauches (8) kleiner als der Außendurchmesser des Schlauches (8) ist.

9. Nasswischarm nach einem der Ansprüche 6-8, **dadurch gekennzeichnet, dass** der Schlauch (8) nach seinem Austritt aus dem Durchbruch (24) an der Oberseite des Befestigungsteiles (1) einmal oder mehrere Male in eine andere Richtung umgelenkt wird, bevor er aus dem Wischarm (1) austritt.

10. Nasswischarm nach Anspruch 9, **dadurch gekennzeichnet, dass** in der Abdeckkappe (27) ein in Richtung auf das Befestigungsteil (1) abstehender Niederhalter (30) angebracht ist, vorzugsweise in Form einer oder mehrerer einstückig mit der Abdeckkappe (27) hergestellter Rippen.

11. Nasswischarm nach Anspruch 10, **dadurch gekennzeichnet, dass** der Schlauch (8) zwischen dem Niederhalter (30) in der Abdeckkappe (27) und der Oberseite des Befestigungsteiles (1) unter angemessener elastischer Verformung des Schlauchquerschnittes eingeklemmt ist.

12. Nasswischarm nach einem der vorhergehenden Ansprüche, **dadurch gekennzeichnet, dass** der Schlauch (8) durch eine in der am Befestigungsteil (1) angebrachten Abdeckkappe (27) vorgesehene Öffnung (28) aus dem Wischarm austritt.

13. Nasswischarm nach einem der vorhergehenden Ansprüche, **dadurch gekennzeichnet, dass** die Festlegung des Schlauches (8) an der ersten Festlegungsstelle (12) durch dessen Verbindung mit dem Anschlussstutzen (10) der Düsenvorrichtung (7), die direkt am Wischarm bzw. Wischblatt (5) oder an einem mit dem Wischarm bzw. dem Wischblatt (5) verbundenen Bauteil befestigt ist, oder durch ein anderes geeignetes Mittel, beispielsweise eine Klemm- bzw. Haltevorrichtung (11) am Wischarm bzw. Wischblatt (5) oder an einem mit dem Wischarm bzw. dem Wischblatt (5) verbundenen Bauteil erfolgt.

## Claims

1. Wiper arm of a windscreen wiper for windscreens of vehicles with a link part (3) connected to a fastening part (1) via a joint (2) so as to pivot toward the windscreen (6) to be wiped or away from the windscreen (6) to be wiped and to which fastening part (1) a wiper blade (5) is to be pivotally fastened directly or via a wiper rod (4) fastened to the link part (3), a nozzle device (7) for delivering washing fluid onto the windscreen (6) to be wiped being arranged on the link part (3) or on the wiper rod (4) or on the wiper blade (5), which device is supplied with washing fluid via an elastic hose (8) guided along the wiper arm in the region of the link part (3) and of the fastening part (1) so as to be substantially concealed and traverses the joint (2) at the side pointing toward the windscreen (6), the hose (8) being fixed at the one side of the joint (2) to a first fixing point (12) on the link part (3) or on the wiper rod (4) or on the wiper blade (5) or on a component connected to the link part (3) or on the wiper rod (4) or the wiper blade (5) and being guided away from the wiper arm at the other side of the joint (2) and outside of the wiper arm being connectable to a feed line or a pump or a storage container or the like, the hose (8) being fixed to the fastening part (1) and/to a cap (27) fixed on the fastening part (1) in the manner of a strain relief, so a second fixing point (13) is formed, and in that in the operating position of the wiper arm the hose (8) is durably held taut in the space between the fixing points (12, 13) located on either side of the joint (2) in its longitudinal direction without or without substantial tensile stress, **characterised in that** fixing of the hose (8) in its longitudinal direction to the fastening part (1) or to the cap (27) is brought about by projections (22) projecting alternately from the one side wall (20, 17) of a hose duct (19) into the hose duct (19) and corresponding dents (23) in the other side wall (17, 20) of the hose duct (19).

2. Wiper arm according to the preamble of claim 1, **characterised in that** fixing of the hose (8) to the second fixing point (13) is brought about projections located or fixed on the fastening part (1) and/or on the cap (27).

3. Wiper arm according to the preamble of claim 1, **characterised in that** fixing of the hose (8) to the second fixing point (13) is brought about by a plurality of apertures in the fastening part (1) through which the hose (8) is guided in alternating directions.

4. Wiper arm according to any of the preceding claims, **characterised in that** the hose (8) is fixed to the second fixing point (13) by an excursion or by a plurality of excursions in alternate directions or by a labyrinth-like or serpentine-shaped hose guiding device on the fastening part (1) and/or on a cap (27) fixed on the fastening part (1).

5. Wiper arm according to claim 1, **characterised in that** the hose duct (19) is provided on the fastening part (1) or on the cap (27) and is preferably open at a longitudinal side.

6. Wiper arm according to any of the preceding claims, **characterised in that** after traversing the joint (2) the hose (8) is guided from the link part (3) through an aperture (24) in the fastening part (1) from the lower side of the fastening part (1) to the upper side thereof.

7. Wiper arm according to claim 6, **characterised in that** the hose (8) is jammed inside the aperture (24).

8. Wiper arm according to claim 7, **characterised in that** the aperture (24) has the form of a slot, the width (B) of which outside of a region for the introduction of the hose (8) is smaller than the external diameter of the hose (8) to bring about jamming of the hose (8).

9. Wiper arm according to any of claims 6 to 8, **characterised in that** after exiting the aperture (24) at the upper side of the fastening part (1) the hose (8) is deflected once or several times in a different direction before it exits from the wiper arm (1).

10. Wiper arm according to claim 9, **characterised in that** a holding down device (30) protruding in the direction of the fastening part (1) is fixed in the cap (27), preferably in the form of one or more ribs produced integrally with the cap (27).

11. Wiper arm according to claim 10, **characterised in that** the hose (8) is jammed between the holding down device (30) in the cap (27) and the upper side of the fastening part (1) with appropriate elastic deformation of the cross-section of the hose.

12. Wiper arm according to any of the preceding claims, **characterised in that** the hose (8) exits from the wiper arm through an aperture (28) provided in the cap (27) fixed on the fastening part (1).

13. Wiper arm according to any of the preceding claims, **characterised in that** the hose (8) is fixed to the first fixing point (12) by its connection with the connecting sleeve (10) of the nozzle device (7) fastened directly to the wiper arm or wiper blade (5) or to a component connected to the wiper arm or wiper blade (5) or by a different suitable means, for example a clamping or holding device (11) on the wiper arm or wiper blade (5) or on a component connected to the wiper arm or wiper blade (5).

## Revendications

1. Bras d'essuyage à arrosage d'un dispositif essuie-glace pour vitres de véhicule, comportant un élément articulé (3), qui est relié, par une articulation (2), à un élément de fixation (1), de manière à pouvoir pivoter dans un sens et dans l'autre sur la vitre (6) à essuyer, et auquel une lame d'essuyage (5) peut être fixée, directement ou par l'intermédiaire d'une tige d'essuyage (4) fixée à l'élément articulé (3), de manière à pouvoir pivoter, sur l'élément articulé (3), ou sur la tige d'essuyage (4) ou sur la lame d'essuyage (5) étant disposé un dispositif à gicleurs (7) pour distribuer un liquide de lavage sur la vitre (6) à essuyer, lequel dispositif est alimenté en liquide de lavage par un tuyau élastique (8) qui, dans la zone de l'élément articulé (3) et de l'élément de fixation (1), est guidé sensiblement dissimulé le long du bras d'essuyage et qui traverse l'articulation (2) sur le côté tourné vers la vitre (6), le tuyau (8) étant fixé, sur un côté de l'articulation (2), en un premier emplacement de fixation (12), sur l'élément articulé (3) ou la tige d'essuyage (4), ou sur la lame d'essuyage (5) ou sur un composant relié à l'élément articulé (3) ou à la tige d'essuyage (4) ou à la lame d'essuyage (5), et s'éloignant du bras d'essuyage, sur l'autre côté de l'articulation (2), et pouvant être raccordé, à l'extérieur du bras d'essuyage, à un conduit d'arrivée ou à une pompe ou à un réservoir ou similaire, le tuyau (8) étant fixé à l'élément de fixation (1) ou/et à un capuchon de couverture (27), placé sur l'élément de fixation (1) à la manière d'une décharge de traction, de sorte qu'il est formé un deuxième emplacement de fixation (13), et en ce qu'en position de travail du bras d'essuyage, le tuyau (8) étant maintenu tendu en permanence dans sa direction longitudinale sans sollicitation en traction ou sans sollicitation en traction sensible, à distance entre les emplacements de fixation (12, 13) situés des deux côtés de l'articulation (2), **caractérisé en ce que** la fixation du tuyau (8) dans sa direction longitudinale sur l'élément de fixation (1) ou sur le capuchon de couverture (27) est provoquée par des saillies (22) s'engageant depuis une paroi latérale (20, 17) d'un canal (19) pour le tuyau dans le canal (19) pour le tuyau et alternativement par des creux (23) correspondants de l'autre paroi latérale (17, 20) du canal (19) pour le tuyau.

2. Bras d'essuyage à arrosage selon le préambule de la revendication 1, **caractérisé en ce que** la fixation du tuyau (8) au deuxième emplacement de fixation (13) est réalisée au moyen de saillies qui se trouvent ou sont placées sur l'élément de fixation (1) ou/et sur le capuchon de couverture (27).

3. Bras d'essuyage à arrosage selon le préambule de la revendication 1, **caractérisé en ce que** la fixation du tuyau (8) au deuxième emplacement de fixation (13) est réalisée au moyen de plusieurs ajours pratiqués dans l'élément de fixation (1), à travers lesquels le tuyau (8) passe dans des sens alternés.

4. Bras d'essuyage à arrosage selon l'une des revendications précédentes, **caractérisé en ce que** le tuyau (8) est fixé au deuxième emplacement de fixation (13) par une déviation ou par plusieurs déviations en sens alternés ou par un tracé en labyrinthe ou en serpentin du tuyau sur l'élément de fixation (1) ou/et sur un capuchon de couverture (27) placé sur l'élément de fixation (1).

5. Bras d'essuyage à arrosage selon la revendication 1, **caractérisé en ce que** le canal (19) du tuyau est prévu sur l'élément de fixation (1) ou sur le capuchon de couverture (27) et est de préférence ouvert sur un côté longitudinal.

6. Bras d'essuyage à arrosage selon l'une des revendications précédentes, **caractérisé en ce que** le tuyau (8), provenant de l'élément articulé (3), après avoir traversé l'articulation (2) à travers un ajour (24) de l'élément de fixation (1), est guidé depuis le côté inférieur de l'élément de fixation (1) vers son côté supérieur.

7. Bras d'essuyage à arrosage selon la revendication 6, **caractérisé en ce que** le tuyau (8) est pincé à l'intérieur de l'ajour (24).

8. Bras d'essuyage à arrosage selon la revendication 7, **caractérisé en ce que** l'ajour (24) a la forme d'un trou oblong dont la largeur (B), à l'extérieur d'une zone d'introduction du tuyau (8), est plus petite que le diamètre extérieur du tuyau (8), pour provoquer le serrage du tuyau (8).

9. Bras d'essuyage à arrosage selon l'une des revendications 6 à 8, **caractérisé en ce qu'**après sa sortie de l'ajour (24) sur le côté supérieur de l'élément de fixation (1), le tuyau (8) est dévié une ou plusieurs fois dans un autre sens avant de ressortir du bras d'essuyage (1).

10. Bras d'essuyage à arrosage selon la revendication 9, **caractérisé en ce que** dans le capuchon de couverture (27) est placé un organe presseur (30), dépassant en direction de l'élément de fixation (1), de préférence sous la forme d'une ou de plusieurs nervures réalisées d'un seul tenant avec le capuchon de couverture (27).

11. Bras d'essuyage à arrosage selon la revendication 10, **caractérisé en ce que** le tuyau (8) est pincé entre l'organe presseur (30) dans le capuchon de couverture (27) et le côté supérieur de l'élément de fixation (1), par déformation élastique convenable de la section du tuyau.

12. Bras d'essuyage à arrosage selon l'une des revendications précédentes, **caractérisé en ce que** le tuyau (8) ressort du bras d'essuyage à travers une ouverture (28) prévue dans le capuchon de couverture (27) placé sur l'élément de fixation (1).

13. Bras d'essuyage à arrosage selon l'une des revendications précédentes, **caractérisé en ce que** la fixation du tuyau (8) au premier emplacement de fixation (12) s'effectue par sa liaison avec la tubulure de raccordement (10) du dispositif à gicleurs (7) qui est directement fixé au bras d'essuyage ou à la lame d'essuyage (5) ou à un composant relié au bras d'essuyage ou à la lame d'essuyage (5), ou par un autre moyen approprié, par exemple un dispositif de serrage ou de maintien (11) sur le bras d'essuyage ou la lame d'essuyage (5) ou sur un composant relié au bras d'essuyage ou à la lame d'essuyage (5).
